# EUROPEAN PATENT SPECIFICATION

(11) **EP 3 822 796 B1**
(45) Date of publication and mention of the grant of the patent: **18.01.2023**
(21) Application number: 18928427.6
(22) Date of filing: 31.07.2018
(51) Int. Cl.: G06F 12/08, G06F 12/06

(54) **MEMORY INTERLEAVING METHOD AND DEVICE**
VERFAHREN UND VORRICHTUNG ZUR SPEICHERVERSCHACHTELUNG
PROCÉDÉ ET DISPOSITIF D'ENTRELACEMENT DE MÉMOIRE

(43) Date of publication of application: 19.05.2021
(73) Proprietor: HUAWEI TECHNOLOGIES CO., LTD., Shenzhen, Guangdong 518129 (CN)
(72) Inventor: XIN, Hengchao, Shenzhen, Guangdong 518129 (CN); XIA, Jing, Shenzhen, Guangdong 518129 (CN); ZENG, Hongyi, Shenzhen, Guangdong 518129 (CN); CHEN, Zhirui, Shenzhen, Guangdong 518129 (CN)
(74) Representative: Maiwald GmbH
(86) International application number: PCT/CN2018/097807
(87) International publication number: WO 2020/024113

(56) References cited:
- EP-A1- 2 929 447
- CN-A- 104 750 557
- CN-A- 105 446 911
- CN-A- 105 452 986
- CN-A- 105 518 632
- CN-A- 106 155 912
- US-A1- 2008 320 254
- US-A1- 2015 100 746
- US-A1- 2016 330 033
- US-A1- 2017 371 812

## Description

### TECHNICAL FIELD

Embodiments of this application relate to the computer field, and in particular, to a memory interleaving method and an apparatus.

### BACKGROUND

When a central processing unit (CPU) accesses a memory, a memory controller (MC) controls access of the CPU to the memory. A channel between the memory controller and the memory may be referred to as a memory channel. When more than two memory controllers are disposed on a mainboard, each memory controller controls a part of memory in a memory system, and a memory capacity corresponding to each memory channel is equal. US2008/320254A1 describes a method, apparatus, and system, which generally relate to an interconnect routing transactions to target IP cores, including two or more channels making up a first aggregate target. The two or more channels populate an address space assigned to the first aggregate target and appear as a single target to the initiator IP cores. The interconnect implements chopping logic to chop an individual transaction from a first initiator IP core whose address sequence crosses a channel address boundary from a first channel to a second channel within the first aggregate target into two or more burst transactions. A first chopped burst transaction is chopped to fit within the address boundaries of the first channel and a second chopped burst transaction is chopped to fit within the address boundaries of the second channel.

EP2929447A1 describes systems and methods for dynamically allocating a memory subsystem. An exemplary embodiment comprises a method for dynamically allocating a memory subsystem in a portable computing device. The method involves fully interleaving a first portion of a memory subsystem having memory components with asymmetric memory capacities. A second remaining portion of the memory subsystem is partial interleaved according to an interleave bandwidth ratio. The first portion of the memory subsystem is allocated to one or more high-performance memory clients. The second remaining portion is allocated to one or more relatively lower-performance memory clients.

To improve system performance, a memory interleaving technology can be used to evenly interleave access to all memory channels. All the memory channels can use a same interleaving window and a same interleaving algorithm. However, due to factors such as different quantities of memory modules controlled by the memory controllers and costs, memory capacities corresponding to the memory channels may not be exactly the same. When the memory capacities corresponding to the memory channels are not equal, if all the memory channels still use the same interleaving window and the same interleaving algorithm, access may be concentrated in a specific memory channel, and a remaining memory channel is in an idle state. However, if two interleaving windows and two interleaving algorithms are used to interleave access, different address spaces are enabled to reflect different fetch performance.

### SUMMARY

Embodiments of this application provide a memory interleaving method and an apparatus, to resolve a problem that fetch performance of different address spaces is different when two interleaving windows and two interleaving algorithms are used to interleave access in a case in which memory capacities corresponding to memory channels are not equal.

To achieve the foregoing objective, the following technical solutions are used in the embodiments of this application.

In a first aspect, there is provided a memory interleaving method as defined in appended claim 1.

In a second aspect, there is provided a communications apparatus as defined in appended claim 7.

In a third aspect, there is provided a computer-readable storage medium as defined in appended claim 8.

In a fourth aspect, there is provided a computer program product as defined in appended claim 9..

The invention and its scope of protection is defined in the above reference independent claims.

The following examples of the application, provide the skilled person with examples of how technical subject matter can be combined.

According to a first example, an embodiment of this application provides a memory interleaving method. The method may be applied to a CPU, and/or the method may be applied to a communications apparatus that can support the CPU in implementing the method. For example, the communications apparatus includes a chip system, and the method includes: dividing an access capacity into P partial access capacities based on N pieces of configuration information; and mapping the P partial access capacities to N memory channels according to a configuration mapping table. N represents a total quantity of memory channels, and N is an integer greater than or equal to 2. The N pieces of configuration information are configuration information of the N memory channels, one piece of configuration information is corresponding to one memory channel, and the P partial access capacities have a same size. The configuration mapping table is used to indicate a mapping relationship between the capacity and the memory channel.

According to the memory interleaving method provided in this embodiment of this application, the access capacity is divided according to a quantity of capacities that are mapped to the memory channel and that are indicated by the configuration information, and then divided partial access capacities are mapped to the memory channel according to the configuration mapping table, so that two capacities are mapped to at least one of the N memory channels. Therefore, one interleaving window is used to implement memory interleaving processing for the access capacity, to avoid a fetch performance difference of different address spaces.

With reference to the first example, in a possible implementation, before the dividing an access capacity into P partial access capacities based on N pieces of configuration information, the method further includes: generating the N pieces of configuration information and the configuration mapping table, where the N pieces of configuration information include M pieces of first configuration information and N - M pieces of second configuration information. The first configuration information includes a memory channel identifier and a first indication identifier, and the first indication identifier is used to indicate that a memory channel corresponding to the memory channel identifier maps two capacities. The second configuration information includes a memory channel identifier and a second indication identifier, and the second indication identifier is used to indicate that a memory channel corresponding to the memory channel identifier maps one capacity. M is an integer, and M is greater than or equal to 1 and less than N.

With reference to the first example and the foregoing possible implementation, in another possible implementation, before the mapping the P partial access capacities to the N memory channels according to a configuration mapping table, the method further includes: performing continuous processing on address spaces corresponding to discontinuous partial access capacities that are mapped to a same memory channel.

With reference to the foregoing possible implementations, in another possible implementation, a flag bit of an address space of each partial access capacity is set at a low bit of an address of a memory that is requested to be accessed.

With reference to the foregoing possible implementations, in another possible implementation, the method further includes: separately recovering an address to an original address based on the N pieces of configuration information and the flag bit of the address space of each partial access capacity.

According to a second example, an embodiment of this application further provides a communications apparatus, configured to implement the method described in the first example. The communications apparatus is a CPU or a communications apparatus that supports the CPU in implementing the method described in the first example. For example, the communications apparatus includes a chip system. For example, the communications apparatus includes a processing unit. The processing unit is configured to: divide an access capacity into P partial access capacities based on N pieces of configuration information; and map the P partial access capacities to N memory channels according to a configuration mapping table. N represents a total quantity of memory channels, and N is an integer greater than or equal to 2. The N pieces of configuration information are configuration information of the N memory channels, one piece of configuration information is corresponding to one memory channel, and the P partial access capacities have a same size. The configuration mapping table is used to indicate a mapping relationship between the capacity and the memory channel.

Optionally, a specific memory interleaving method is the same as that in corresponding descriptions in the first example. Details are not described herein again.

Optionally, the communications apparatus may further include a communications interface, used to send or receive data.

It should be noted that, the functional modules in the second example may be implemented by hardware, or may be implemented by hardware by executing corresponding software. The hardware or software includes one or more modules corresponding to the foregoing function. For example, a transceiver is configured to complete functions of the communications interface, a processor is configured to complete functions of the processing unit, and a memory is configured to store a program instruction used by the processor to perform the method in the embodiment of this application. The processor, the transceiver, and the memory are connected and implement mutual communication through a bus. For details, refer to a behavior function of the CPU in the method in the first example.

According to a third example, an embodiment of this application further provides a communications apparatus, configured to implement the method described in the first example. The communications apparatus is a CPU or a communications apparatus that supports the CPU in implementing the method described in the first example. For example, the communications apparatus includes a chip system. For example, the communications apparatus includes a processor, configured to implement the function of the method described in the first example. The communications apparatus may further include a memory, configured to store a program instruction and data. The memory is coupled to the processor. The processor may invoke and execute the program instruction stored in the memory, to implement the function in the method described in the first example. The communications apparatus may further include a communications interface, and the communications interface is used by the communications apparatus to communicate with another device. For example, if the communications apparatus is a CPU, the another device is a memory.

In a possible device, the communications apparatus includes a communications interface, and the communications interface is used by the communications apparatus to communicate with another apparatus. For example, the communications interface may be a transceiver, and the transceiver is configured to send or receive data. The memory is configured to store the program instruction. The processor is configured to: divide an access capacity into P partial access capacities based on N pieces of configuration information; and map the P partial access capacities to N memory channels according to a configuration mapping table. N represents a total quantity of memory channels, and N is an integer greater than or equal to 2. The N pieces of configuration information are configuration information of the N memory channels, one piece of configuration information is corresponding to one memory channel, and the P partial access capacities have a same size. The configuration mapping table is used to indicate a mapping relationship between the capacity and the memory channel.

Optionally, a memory interleaving method is the same as that in corresponding descriptions in the first example. Details are not described herein again.

According to a fourth example, an embodiment of this application further provides a computer-readable storage medium, including a computer software instruction. When the computer software instruction is run in a communication apparatus, the communication apparatus is enabled to perform the method in the first example.

According to a fifth example, an embodiment of this application further provides a computer program product including an instruction. When the computer program product runs in a communication apparatus, the communication apparatus is enabled to perform the method in the first example.

According to a sixth example, an embodiment of this application provides a chip system. The chip system includes a processor, and may further include a memory, configured to implement a function of the CPU in the foregoing method. The chip system may include a chip, or may include a chip and another discrete component.

In addition, for technical effects brought by the design manners of any one of the foregoing examples, refer to technical effects brought by different design manners of the first example. Details are not described herein again.

In the embodiments of this application, names of the CPU and the communications apparatus constitute no limitation on the device. In actual implementation, these devices may have other names, provided that functions of the devices are similar to those in the embodiments of this application, and fall within the scope of the claims of this application and the equivalent technologies thereof.

### BRIEF DESCRIPTION OF DRAWINGS

FIG. 1 is an example composition diagram of a computer device according to an embodiment of this application;
FIG. 2 is a schematic flowchart of a memory interleaving method according to an embodiment of this application;
FIG. 3 is a schematic flowchart of another memory interleaving method according to an embodiment of this application;
FIG. 4 is an example composition diagram of a communications apparatus according to an embodiment of this application; and
FIG. 5 is an example composition diagram of another communications apparatus according to an embodiment of this application.

### DESCRIPTION OF EMBODIMENTS

A memory is a type of storage, is one of important components on a host, and is a bridge for communication between a CPU and another device. The memory is mainly configured to temporarily store data, and work with the CPU to coordinate a processing speed of the CPU, thereby improving performance of an entire system. The memory may also be referred to as a primary memory or an internal memory.

The memory generally adopts a structure of a memory module, and may be classified into a single in-line memory module (SIMM) and a dual in-line memory module (DIMM) according to different encapsulation and pin forms of the memory module. One memory module can be inserted into one slot on a mainboard. The memory module is implemented by attaching a plurality of same memory chips to a same printed circuit board (PCB) lining board. In other words, the memory module includes a plurality of memory chips. The memory chip is also called a memory particle, and the memory chip is a basic unit of the memory module.

According to an operating principle of the memory, the memory is mainly classified into a read-only memory (ROM) and a random access memory (RAM). Data can only be read from and cannot be written randomly into the ROM. The ROM has an advantage of keeping data unchanged after a power failure. Generally, the ROM is used to store unchangeable data, such as a basic input/output system (BIOS). Content stored in the RAM can be randomly read and written by using an instruction. Data in the RAM is lost when a power failure occurs. Therefore, the data can be stored only in a power-on state. The memory generally said refers to the RAM

Based on a structure and an operating principle, the RAM may be classified into a static RAM and a dynamic RAM. Currently, the memory widely used in the industry is a synchronous dynamic random access memory (SDRAM). Synchronization indicates that the memory works based on a synchronization clock. Internal command sending and data transmission is based on the synchronization clock. Dynamic refers to that a storage array needs to be continuously refreshed to prevent data from being lost. Random means that data is not stored in sequence in a linear manner, but data is read or written in a freely specified address manner. To improve a speed of the SDRAM, a double rate synchronous dynamic random access memory (DDR SDRAM) may also be used in the industry. In this way, the speed of the SDRAM can be doubled without increasing a clock frequency, and a transmission rate and a memory bandwidth are doubled compared with those of the SDRAM.

A memory controller (MC) may further be disposed on the mainboard. For example, the memory controller may be disposed in the CPU, or the memory controller is disposed in the memory. When the CPU accesses the memory, the memory controller controls access of the CPU to the memory. A channel between the memory controller and the memory may be referred to as a memory channel. Certainly, the memory channel may also be understood as one memory controller and a memory medium corresponding to the memory controller. To improve a data processing speed of the CPU, more than two memory controllers may be disposed on the motherboard, and each memory controller controls a part of memory on the motherboard. In this scenario, the mainboard includes more than two memory channels, and these memory channels are generally completely the same and independent. A dual-channel memory essentially means that the CPU has two completely independent memory controllers. One memory channel may correspond to one or more slots of one or more memory modules.

Generally, a data bit width of the memory controller is 32 bits or 64 bits. A memory chip bit width of a single memory chip in the memory module is 4 bits, 8 bits, or 16 bits. To meet a data bit width requirement of the memory controller, a plurality of memory chips need to be combined to exchange data with the memory controller. A combination of the plurality of memory chips is referred to as a rank, or may be referred to as a physical bank (P-BANK). For example, if the data bit width of the memory controller is 64 bits, and the memory chip bit width is 8 bits, eight memory chips form one rank. Similarly, if the data bit width of the memory controller is 64 bits and the memory chip bit width is 16 bits, four memory chips form one rank. The DIMM is a larger unit than the rank. Currently, one DIMM includes one to four ranks. Different ranks can be connected to different chip select signals in the memory controller.

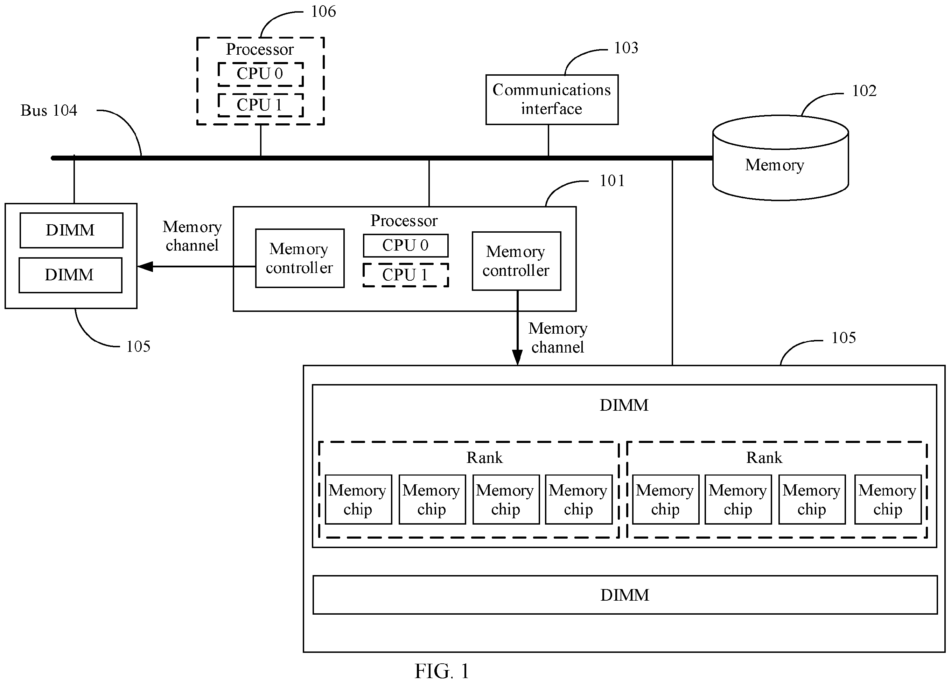

FIG. 1 is an example composition diagram of a computer device according to an embodiment of this application. As shown in FIG. 1, the computer device may include at least one processor 101, a memory 102, a communications interface 103, a communications bus 104, and a DIMM 105.

Constituent parts of the computer device are specifically described below with reference to FIG. 1.

The processor 101 is a control center of the computer device, and may be one processor, or may be a collective name of a plurality of processing elements. For example, the processor 101 may be a CPU, or an application specific integrated circuit (ASIC), or may be configured as one or more integrated circuits implementing this embodiment of this application, for example, one or more microprocessors (DSP) or one or more field programmable gate arrays (FPGA).

The processor 101 may implement various functions of the computer device by running or executing a software program stored in the memory 102 and invoking data stored in the memory 102.

In a specific implementation, in an embodiment, the processor 101 may include one or more CPUs, for example, a CPU 0 and a CPU 1 shown in FIG. 1.

In this embodiment of this application, the processor 101 may further include two memory controllers, and each memory controller is connected to two DIMMs 105.

In a specific implementation, in an embodiment, the computer device may include a plurality of processors, for example, the processor 101 and a processor 106 in FIG. 1. Each of the processors may be a single-core processor (single-CPU) or may be a multi-core processor (multi-CPU). The processor herein may be one or more devices, circuits, and/or processing cores for processing data (for example, computer program instructions).

The memory 102 may be an ROM or another type of static storage device that can store static information and instructions, or an RAM or another type of dynamic storage device that can store information and instructions, or may be an electrically erasable programmable read-only memory (EEPROM), a compact disc read-only memory (CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer. However, the memory 102 is not limited thereto. The memory 102 may exist independently, and is connected to the processor 101 through the communications bus 104. Alternatively, the memory 102 may be integrated with the processor 101.

The memory 102 is configured to store the software program for performing the solution in this application, and the processor 101 controls execution of the software program.

The communications interface 103 is configured to communicate with another device or a communications network, for example, the Ethernet, a radio access network (RAN), or a wireless local area network (WLAN). The communications interface 103 may include a receiving unit for implementing a receiving function and a sending unit for implementing a sending function.

The communications bus 104 may be an industry standard architecture (ISA) bus, a peripheral component interconnect (PCI) bus, an extended industry standard architecture (EISA) bus, or the like. The bus may be classified into an address bus, a data bus, a control bus, and the like. For ease of representation, only one thick line is used to represent the bus in FIG. 1, but this does not mean that there is only one bus or only one type of bus.

A structure of the device shown in FIG. 1 does not constitute a limitation on the computer device. The computer device may include components more or fewer than those shown in the figure, or may combine some components, or may have a different component arrangement.

Generally, due to spatial locality of the software program, addresses accessed by the software program in a short time may be concentrated in a relatively small range. When access is concentrated on a specific segment of address, if the access is distinguished only by using an upper-bit address, the access may be concentrated in a specific memory channel, and a remaining memory channel is in an idle state. To make full use of a memory bandwidth of a system, ensure that bandwidths of memory channels are balanced, and improve usage of a DDR SDRAM, operations of accessing the DDR SDRAM need to be interleaved. Generally, an address interleaving mode is used to evenly interleave address spaces that need to be accessed to all memory channels (generally, low-bit interleaving is used), and all the memory channels are used to process the addresses that need to be accessed.

When memory capacities corresponding to memory channels in a memory system are equal, all the memory channels may use a same interleaving window and a same interleaving algorithm. For example, when two memory channels are disposed in the memory system, addresses in the memory system may be interleaved to the two memory channels in an average interleaving manner. For example, an odd address is interleaved to a first memory channel, and an even address is interleaved to a second memory channel.

However, in actual application, the memory capacities corresponding to the memory channels may not be exactly the same, due to factors such as costs or limitation on a quantity of single-board DIMM slots. When the memory capacities corresponding to the memory channels are not equal, if all the memory channels still use the same interleaving window and the same interleaving algorithm, access may be concentrated in a specific memory channel, and a remaining memory channel is in an idle state. However, if two interleaving windows and two interleaving algorithms are used to interleave access, different address spaces are enabled to reflect different fetch performance.

For example, as shown in Table 1, it is assumed that an address range of the memory system is 0 to 6G, and a memory capacity is 6G. The memory system includes four memory channels. 4G in the 6G may be first evenly mapped to the four memory channels from a memory channel 0 to a memory channel 3 according to an interleaving algorithm (even interleaving) corresponding to an interleaving window 1. The remaining 2G may be mapped to the memory channel 2 and the memory channel 3 in the four memory channels according to an interleaving algorithm corresponding to an interleaving window 2. Certainly, the remaining 2G may alternatively be mapped to the memory channel 0 and the memory channel 1 of the four memory channels. It can be learned from Table 1 that the memory capacity is mapped to the four memory channels through the two interleaving windows, and the memory capacity cannot be evenly mapped to the memory channels. Capacities interleaved by the memory channel 0 and the memory channel 1 are the same, capacities interleaved by the memory channel 2 and the memory channel 3 are the same, and the capacities interleaved by the memory channel 0 and the memory channel 1 are different from the capacities interleaved by the memory channel 2 and the memory channel 3. The interleaving window 1 and the interleaving window 2 correspond to different interleaving algorithms.

**Table 1**

| System address range (0 to 6G) | Memory capacity (6GB) | | | |
|---|---|---|---|---|
| | Memory channel 0 | Memory channel 1 | Memory channel 2 | Memory channel 3 |
| Interleaving window 1 | 1GB | 1GB | 1GB | 1GB |
| Interleaving window 2 | | | 1GB | 1GB |

To resolve the foregoing problem, an embodiment of this application provides a memory interleaving method. A basic principle of the method is as follows: dividing an access capacity into P partial access capacities based on N pieces of configuration information; and mapping the P partial access capacities to N memory channels according to a configuration mapping table. N represents a total quantity of memory channels, and N is an integer greater than or equal to 2. The N pieces of configuration information are configuration information of the N memory channels, one piece of configuration information is corresponding to one memory channel, and the P partial access capacities have a same size. The configuration mapping table is used to indicate a mapping relationship between the capacity and the memory channel.

According to the memory interleaving method provided in this embodiment of this application, the access capacity is divided according to a quantity of capacities that are mapped to the memory channel and that are indicated by the configuration information, and then divided partial access capacities are mapped to the memory channel according to the configuration mapping table, so that two capacities are mapped to at least one of the N memory channels. Therefore, one interleaving window is used to implement memory interleaving processing for the access capacity, to avoid a fetch performance difference of different address spaces.

The following describes the implementations of the embodiments of this application in detail with reference to accompanying drawings.

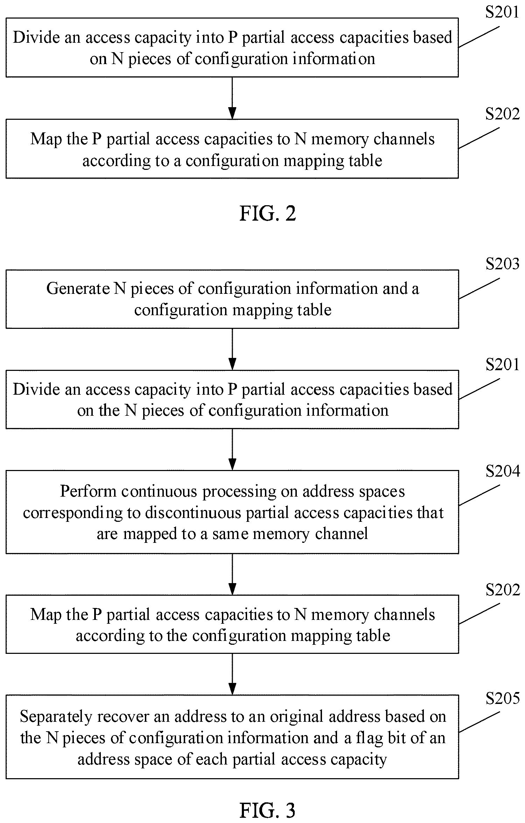

FIG. 2 is a schematic flowchart of a memory interleaving method according to an embodiment of this application. As shown in FIG. 2, the method may include the following steps.

S201: Divide an access capacity into P partial access capacities based on N pieces of configuration information.

The N pieces of configuration information are configuration information of N memory channels, and one piece of configuration information corresponds to one memory channel. The configuration information is used to indicate a quantity of capacities mapped to the memory channel, and two capacities are mapped to at least one of the N memory channels. N represents a total quantity of memory channels, and N is an integer greater than or equal to 2.

It may be understood that, a quantity of capacities mapped to the memory channel may be determined based on memory capacities corresponding to all memory channels in a memory system. Generally, when memory capacities corresponding to two memory channels are different, a ratio of the memory capacities corresponding to the two memory channels is 1:2. In other words, a memory capacity corresponding to one memory channel is twice a memory capacity corresponding to the other memory channel. In this case, one memory channel can map two capacities, and the other memory channel can map one capacity.

The N pieces of configuration information include M pieces of first configuration information and N - M pieces of second configuration information. The first configuration information includes a memory channel identifier and a first indication identifier, and the first indication identifier is used to indicate that a memory channel corresponding to the memory channel identifier maps two capacities. The second configuration information includes a memory channel identifier and a second indication identifier, and the second indication identifier is used to indicate that a memory channel corresponding to the memory channel identifier maps one capacity. M is an integer, and M is greater than or equal to 1 and less than N.

For example, as shown in Table 2, it is assumed that an address range of the memory system is 0 to 6G, and a memory capacity is 6G. The memory system includes four memory channels, that is, N = 4. An identifier of a memory channel 0 may be 0. An identifier of a memory channel 1 may be 1. An identifier of a memory channel 2 may be 2. An identifier of a memory channel 3 may be 3. Memory capacities corresponding to the memory channel 2 and the memory channel 3 are the same. Memory capacities corresponding to the memory channel 0 and the memory channel 1 are the same, and memory capacities corresponding to the memory channel 2 and the memory channel 3 are twice the memory capacities corresponding to the memory channel 0 and the memory channel 1. M = 2.

**Table 2**

| System address range (0 to 6G) | Memory capacity (6GB) | | | |
|---|---|---|---|---|
| | Memory channel 0 | Memory channel 1 | Memory channel 2 | Memory channel 3 |
| Interleaving window 1 | 1GB | 1GB | 2GB | 2GB |

It can be learned from Table 2 that the memory capacity may be divided into six pieces. A size of one capacity is 1GB. The memory channel 0 maps one capacity. The memory channel 1 maps one capacity. The memory channel 2 maps two capacities The memory channel 3 maps two capacities

The access capacity may be a capacity that needs to be used by a user to read and write. The access capacity may be less than or equal to the memory capacity.

After the access capacity is obtained, the access capacity may be divided according to a quantity of capacities that are mapped to all the memory channels and that are indicated by the N pieces of configuration information, to obtain the P partial access capacities. The P partial access capacities have a same size.

S202: Map the P partial access capacities to the N memory channels according to a configuration mapping table.

The configuration mapping table is used to indicate a mapping relationship between the capacity and the memory channel. For example, it is assumed that the memory system includes four memory channels. After the access capacity is divided, six partial access capacities are obtained, that is, P = 6, as shown in Table 3.

**Table 3**

| Capacity name | Memory channel name |
|---|---|
| Partial access capacity 5 | Memory channel 3 |
| Partial access capacity 4 | Memory channel 2 |
| Partial access capacity 3 | Memory channel 1 |
| Partial access capacity 2 | Memory channel 1 |
| Partial access capacity 1 | Memory channel 0 |
| Partial access capacity 0 | Memory channel 0 |

It can be learned from Table 3 that the partial access capacity 0 and the partial access capacity 1 may be mapped to the memory channel 0. The partial access capacity 2 and the partial access capacity 3 may be mapped to the memory channel 1. The partial access capacity 4 may be mapped to the memory channel 2. The partial access capacity 5 may be mapped to the memory channel 3.

According to the memory interleaving method provided in this embodiment of this application, the access capacity is divided according to a quantity of capacities that are mapped to the memory channel and that are indicated by the configuration information, and then divided partial access capacities are mapped to the memory channel according to the configuration mapping table, so that two capacities are mapped to the at least one of the N memory channels. Therefore, one interleaving window is used to implement memory interleaving processing for the access capacity, to avoid a fetch performance difference of different address spaces.

Further, as shown in FIG. 3, this embodiment of this application may further include the following steps.

Before the access capacity is divided into the P partial access capacities based on the N pieces of configuration information, S203 may further be performed.

S203: Generate the N pieces of configuration information and the configuration mapping table.

After the N pieces of configuration information and the configuration mapping table are generated, the N pieces of configuration information and the configuration mapping table are stored. In this way, the access capacity can be divided and mapped.

In addition, address spaces corresponding to the access capacity may include a plurality of segments of discontinuous address spaces. Before the P partial access capacities are mapped to the N memory channels according to the configuration mapping table, S204 may further be performed.

S204: Perform continuous processing on address spaces corresponding to discontinuous partial access capacities that are mapped to a same memory channel.

When the address spaces corresponding to the access capacity include the plurality of segments of discontinuous address spaces, an access capacity corresponding to each segment of consecutive address spaces is divided based on the configuration information of the N memory channels, where the access capacities corresponding to the segments of consecutive address spaces are the same, and divided partial access capacities are also the same. The continuous processing is performed on the address spaces corresponding to the discontinuous partial access capacities that are mapped to the same memory channel. The discontinuous partial access capacities herein refer to access capacities that are obtained after the discontinuous address spaces are divided and that are in the access capacity. It may be understood that division into access capacities corresponding to one segment of continuous address spaces may be understood as one division cycle period. The continuous processing is performed on the address spaces corresponding to the discontinuous partial access capacities that are mapped to the same memory channel, which may be understood as continuity of partial access capacity in different division cycle periods.

Further, a flag bit of an address space of each partial access capacity is set at a low bit of an address of a memory that is requested to be accessed. The low bit of the address of the memory that is requested to be accessed may be a bit one-position higher than an interleaving granularity. Certainly, the flag bit of each address space may alternatively be placed in another position.

When the capacity of the address space is read, S205 may be performed to recover an original address, so as to obtain original data.

S205: Separately recover an address to an original address based on the N pieces of configuration information and the flag bit of the address space of each partial access capacity.

In the embodiments provided in this application, the methods provided in the embodiments of this application are described from a perspective of the CPU. It may be understood that, to implement functions in the methods provided in the embodiments of this application, each network element, for example, the CPU, includes a corresponding hardware structure and/or software module for performing the functions. A person of skilled in the art should easily be aware that, in combination with the examples described in the embodiments disclosed in this specification, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the CPU may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in the embodiments of this application, division into the modules is an example, and is merely logical function division. In actual implementation, another division manner may be used.

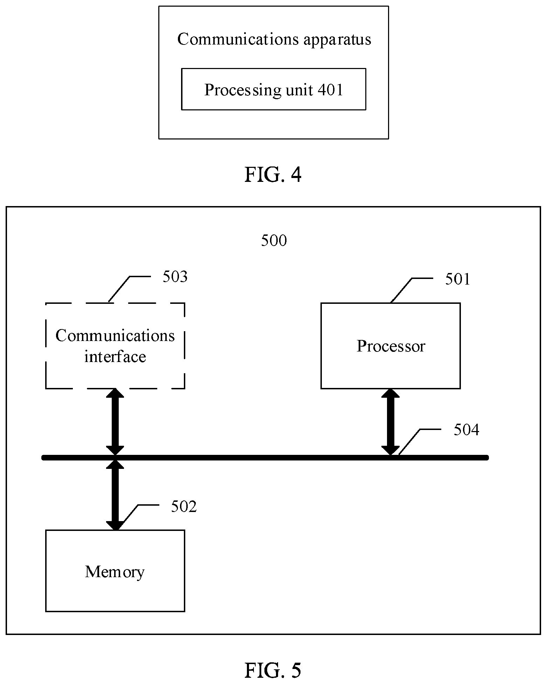

When various functional modules are obtained through division based on various corresponding functions, FIG. 4 is a possible schematic composition diagram of the communications apparatus in the foregoing embodiments. The communications apparatus can perform the steps performed by the CPU in any one of the method embodiments of this application. As shown in FIG. 4, the communications apparatus is a CPU or a communications apparatus that supports the CPU in implementing the methods provided in the embodiments. For example, the communications apparatus may be a chip system. The communications apparatus may include a processing unit 401.

The processing unit 401 is configured to support the communications apparatus in performing the methods described in the embodiments of this application. For example, the processing unit 401 is configured to perform or support the communications apparatus in performing S201 and S202 in the memory interleaving method shown in FIG. 2, and S201 and S205 in the parameter configuration method shown in FIG. 3.

It should be noted that all related content of the steps in the foregoing method embodiments may be cited in function descriptions of corresponding functional modules. Details are not described herein.

The communications apparatus provided in this embodiment of this application is configured to perform the method in any one of the foregoing embodiments, and therefore a same effect can be achieved as that of the methods in the foregoing embodiments.

FIG. 5 shows a communications apparatus 500 according to an embodiment of this application. The communications apparatus 500 is configured to implement a function of the CPU in the foregoing methods. The communications apparatus 500 may be a CPU, or may be an apparatus in a CPU. The communications apparatus 500 may be a chip system. In this embodiment of this application, the chip system may include a chip, or may include a chip and another discrete component.

The communications apparatus 500 includes at least one processor 501, configured to implement a function of the CPU in the methods provided in the embodiment of this application. For example, the processor 501 may be configured to perform S201 to S205. For details, refer to detailed descriptions in the method example. Details are not described herein again.

The communications apparatus 500 may further include at least one memory 502, configured to store a program instruction and/or data. The memory 502 is coupled to the processor 501. Coupling in this embodiment of this application is an indirect coupling or a communication connection between apparatuses, units, or modules, may be in an electrical form, a mechanical form, or another form, and is used for information exchange between the apparatuses, the units, or the modules. The processor 501 may operate with the memory 502. The processor 501 may execute the program instruction stored in the memory 502. The at least one memory may be included in the at least one processor.

The communications apparatus 500 may further include a communications interface 503, configured to communicate with another device through a transmission medium, so that an apparatus in the communications apparatus 500 can communicate with the another device. For example, if the communications apparatus is a CPU, the another device is a memory. The processor 501 receives and sends data through the communications interface 503, and is configured to implement the methods performed by the CPU in the embodiments corresponding to FIG. 2 and

FIG. 3.

A specific connection medium between the communications interface 503, the processor 501, and the memory 502 is not limited in this embodiment of this application. In this embodiment of this application, in FIG. 5, the communications interface 503, the processor 501, and the memory 502 are connected through a bus 504. The bus is represented by using a thick line in FIG. 5. A manner of connection between other components is merely an example for description, and constitutes no limitation. The bus may be classified into an address bus, a data bus, a control bus, and the like. For ease of representation, only one thick line is used to represent the bus in FIG. 5, but this does not mean that there is only one bus or only one type of bus.

In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor, any conventional processor, or the like. The steps of the method disclosed with reference to the embodiments of this application may be directly performed by a hardware processor, or may be performed by using a combination of hardware in the processor and a software module.

In this embodiment of this application, the memory may be a non-volatile memory, for example, a hard disk drive (HDD) or a solid-state drive (SSD), or may be a volatile memory, for example, a random-access memory (RAM). The memory is any other medium that can be configured to carry or store expected program code in a form of an instruction or a data structure and that can be accessed by a computer. However, the memory is not limited thereto. The memory in this embodiment of this application may alternatively be a circuit or any other apparatus that can implement a storage function, and is configured to store a program instruction and/or data. The CPU in the embodiments of this application may be the communications apparatus shown in FIG. 4.

The foregoing descriptions about implementations allow a person skilled in the art to understand that, for the purpose of convenient and brief description, division into the foregoing functional modules is used as an example for illustration. In actual application, the foregoing functions can be allocated to different modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

All or some of the foregoing methods in the embodiments of this application may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a special-purpose computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, an SSD), or the like.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A memory interleaving method, comprising:
dividing (S201) an access capacity into P partial access capacities based on N pieces of configuration information, wherein the P partial access capacities have a same size, the N pieces of configuration information are configuration information of N memory channels, one piece of configuration information corresponds to one memory channel, the configuration information is used to indicate a quantity of capacities mapped to the memory channel, and two capacities are mapped to at least one of the N memory channels, wherein N represents a total quantity of memory channels, and N is an integer greater than or equal to 2; and
mapping (S202) the P partial access capacities to the N memory channels according to a configuration mapping table, wherein the configuration mapping table is used to indicate a mapping relationship between the capacity and the memory channel; and
wherein the N pieces of configuration information comprise M pieces of first configuration information, the first configuration information comprises a memory channel identifier and a first indication identifier, and the first indication identifier is used to indicate that a memory channel corresponding to the memory channel identifier maps two capacities, wherein M is an integer, and M is greater than or equal to 1 and less than N.

2. The memory interleaving method according to claim 1, wherein before the dividing an access capacity into P partial access capacities based on N pieces of configuration information, the method further comprises:
generating the N pieces of configuration information and the configuration mapping table, wherein the N pieces of configuration information comprise N - M pieces of second configuration information; the second configuration information comprises a memory channel identifier and a second indication identifier, and the second indication identifier is used to indicate that a memory channel corresponding to the memory channel identifier maps one capacity.

3. The memory interleaving method according to claim 1 or 2, wherein before the mapping the P partial access capacities to the N memory channels according to a configuration mapping table, the method further comprises:
performing continuous processing on address spaces corresponding to discontinuous partial access capacities that are mapped to a same memory channel.

4. The memory interleaving method according to claim 3, wherein a flag bit of an address space of each partial access capacity is set at a low bit of an address of a memory that is requested to be accessed.

5. The memory interleaving method according to claim 4, wherein the method further comprises:
separately recovering an address to an original address based on the N pieces of configuration information and the flag bit of the address space of each partial access capacity.

6. The memory interleaving method according to any one of claims 1 to 5, wherein in addition to the at least one memory channel to which two capacities are mapped, the N memory channels further include a memory channel to which one capacity is mapped.

7. A communications apparatus, comprising a processing unit (401), wherein the processing unit is configured to implement the memory interleaving method according to any one of claims 1 to 6.

8. A computer-readable storage medium, comprising a computer software instruction, wherein when the computer software instruction is run in a computer, the computer is enabled to perform the memory interleaving method according to any one of claims 1 to 6.

9. A computer program product comprising an instruction, wherein when the computer program product runs in a computer, the computer is enabled to perform the memory interleaving method according to any one of claims 1 to 6.

## Patentansprüche

1. Speicherverschachtelungsverfahren, umfassend:
Teilen (S201) einer Zugriffskapazität in P Teilzugriffskapazitäten basierend auf N Elementen von Konfigurationsinformationen, wobei die P Teilzugriffskapazitäten dieselbe Größe haben, die N Elemente von Konfigurationsinformationen Konfigurationsinformationen von N Speicherkanälen sind, ein Element von Konfigurationsinformation einem Speicherkanal entspricht, die Konfigurationsinformationen verwendet werden, um eine Menge von Kapazitäten abzubilden, die dem Speicherkanal zugeordnet sind, und zwei Kapazitäten mindestens einem der N Speicherkanäle zugeordnet sind, wobei N eine Gesamtmenge von Speicherkanälen darstellt und N eine ganze Zahl größer oder gleich 2 ist; und
Abbilden (S202) der P Teilzugriffskapazitäten auf die N Speicherkanäle gemäß einer Konfigurationsabbildungstabelle, wobei die Konfigurationsabbildungstabelle verwendet wird, um eine Abbildungsbeziehung zwischen der Kapazität und dem Speicherkanal anzugeben; und
wobei die N Elemente von Konfigurationsinformationen M Elemente von ersten Konfigurationsinformationen umfassen, die ersten Konfigurationsinformationen einen Speicherkanalidentifizierer und einen ersten Anzeigeidentifizierer umfassen und der erste Anzeigeidentifizierer verwendet wird, um anzuzeigen, dass ein Speicherkanal entsprechend dem Speicherkanalidentifizierer zwei Kapazitäten abbildet, wobei M eine ganze Zahl ist und M größer oder gleich 1 und kleiner als N ist.

2. Speicherverschachtelungsverfahren nach Anspruch 1, wobei das Verfahren vor dem Teilen einer Zugriffskapazität in P Teilzugriffskapazitäten basierend auf N Elementen von Konfigurationsinformationen ferner umfasst:
Generieren der N Elemente von Konfigurationsinformationen und der Konfigurationsabbildungstabelle, wobei die N Elemente von Konfigurationsinformationen N - M Elemente von zweiten Konfigurationsinformationen umfassen; die zweite Konfigurationsinformation einen Speicherkanalidentifizierer und einen zweiten Anzeigeidentifizierer umfasst, und der zweite Anzeigeidentifizierer verwendet wird, um anzuzeigen, dass ein Speicherkanal, der dem Speicherkanalidentifizierer entspricht, eine Kapazität abbildet.

3. Speicherverschachtelungsverfahren nach Anspruch 1 oder 2, wobei vor dem Abbilden der P Teilzugriffskapazitäten auf die N Speicherkanäle gemäß einer Konfigurationsabbildungstabelle das Verfahren ferner umfasst:
Durchführen einer kontinuierlichen Verarbeitung an Adressräumen, die diskontinuierlichen Teilzugriffskapazitäten entsprechen, die demselben Speicherkanal zugeordnet sind.

4. Speicherverschachtelungsverfahren nach Anspruch 3, wobei ein Flag-Bit eines Adressraums jeder Teilzugriffskapazität auf ein niedriges Bit einer Adresse eines Speichers gesetzt wird, auf den zugegriffen werden soll.

5. Verfahren nach Anspruch 4, wobei das Verfahren ferner umfasst:
Getrenntes Wiederherstellen einer Adresse zu einer ursprünglichen Adresse basierend auf den N Elementen von Konfigurationsinformationen und dem Flag-Bit des Adressraums jeder Teilzugriffskapazität.

6. Speicherverschachtelungsverfahren nach einem der Ansprüche 1 bis 5, wobei zusätzlich zu dem mindestens einen Speicherkanal, dem zwei Kapazitäten zugeordnet sind, die N Speicherkanäle ferner einen Speicherkanal enthalten, dem eine Kapazität zugeordnet ist.

7. Kommunikationsvorrichtung, umfassend eine Verarbeitungseinheit (401), wobei die Verarbeitungseinheit konfiguriert ist, um das Speicherverschachtelungsverfahren nach einem der Ansprüche 1 bis 6 zu implementieren.

8. Computerlesbares Speichermedium, das einen Computersoftwarebefehl umfasst, wobei der Computer, wenn der Computersoftwarebefehl in einem Computer ausgeführt wird, in die Lage versetzt wird, das Speicherverschachtelungsverfahren nach einem der Ansprüche 1 bis 6 durchzuführen.

9. Computerprogrammprodukt, das einen Befehl umfasst, wobei, wenn das Computerprogrammprodukt auf einem Computer ausgeführt wird, der Computer in der Lage ist, das Verfahren nach einem der Ansprüche 1 bis 6 durchzuführen.

## Revendications

1. Procédé d'entrelacement de mémoire, comprenant :
la division (S201) d'une capacité d'accès en P capacités d'accès partielles sur la base de N éléments d'informations de configuration, dans lequel les P capacités d'accès partielles ont une même taille, les N éléments d'informations de configuration sont des informations de configuration de N canaux de mémoire, un élément d'informations de configuration correspond à un canal de mémoire, les informations de configuration sont utilisées pour indiquer une quantité de capacités mises en correspondance avec le canal de mémoire, et deux capacités sont mises en correspondance avec au moins l'un des N canaux de mémoire, dans lequel N représente une quantité totale de canaux de mémoire, et N est un nombre entier supérieur ou égal à 2 ; et
la mise en correspondance (S202) des P capacités d'accès partielles avec les N canaux de mémoire selon une table de mise en correspondance de configuration, dans lequel la table de mise en correspondance de configuration est utilisée pour indiquer une relation de mise en correspondance entre la capacité et le canal de mémoire ; et
dans lequel les N éléments d'informations de configuration comprennent M éléments de premières informations de configuration, les premières informations de configuration comprennent un identificateur de canal de mémoire et un premier identificateur d'indication, et le premier identificateur d'indication est utilisé pour indiquer qu'un canal de mémoire correspondant à l'identificateur de canal de mémoire met en correspondance deux capacités, dans lequel M est un nombre entier, et M est supérieur ou égal à 1 et inférieur à N.

2. Procédé d'entrelacement de mémoire selon la revendication 1, dans lequel avant la division d'une capacité d'accès en P capacités d'accès partielles sur la base de N éléments d'informations de configuration, le procédé comprend en outre :
la génération des N éléments d'informations de configuration et de la table de mise en correspondance de configuration, dans lequel les N éléments d'informations de configuration comprennent N - M éléments de secondes informations de configuration ; les secondes informations de configuration comprennent un identificateur de canal de mémoire et un second identificateur d'indication, et le second identificateur d'indication est utilisé pour indiquer que le canal de mémoire correspondant à l'identificateur de canal de mémoire met en correspondance une capacité.

3. Procédé d'entrelacement de mémoire selon la revendication 1 ou 2, dans lequel avant la mise en correspondance des P capacités d'accès partielles avec les N canaux de mémoire selon une table de mise en correspondance de configuration, le procédé comprend en outre :
le fait d'effectuer un traitement continu sur des espaces d'adressage correspondant à des capacités d'accès partielles discontinues qui sont mises en correspondance avec un même canal de mémoire.

4. Procédé d'entrelacement de mémoire selon la revendication 3, dans lequel un bit drapeau d'un espace d'adressage de chaque capacité d'accès partielle est réglé à un bit bas d'une adresse d'une mémoire dont l'accès est demandé.

5. Procédé d'entrelacement de mémoire selon la revendication 4, dans lequel le procédé comprend en outre :
la récupération séparée d'une adresse à une adresse d'origine sur la base des N éléments d'informations de configuration et du bit drapeau de l'espace d'adressage de chaque capacité d'accès partielle.

6. Procédé d'entrelacement de mémoire selon l'une quelconque des revendications 1 à 5, dans lequel en plus de l'au moins un canal de mémoire avec lequel deux capacités sont mises en correspondance, les N canaux de mémoire comportent en outre un canal de mémoire avec lequel une capacité est mise en correspondance.

7. Appareil de communication, comprenant une unité de traitement (401), dans lequel l'unité de traitement est configurée pour mettre en œuvre le procédé d'entrelacement de mémoire selon l'une quelconque des revendications 1 à 6.

8. Support de stockage lisible par ordinateur, comprenant une instruction de logiciel, dans lequel, lorsque l'instruction de logiciel est exécutée sur un ordinateur, l'ordinateur est activé pour exécuter le procédé d'entrelacement de mémoire selon l'une quelconque des revendications 1 à 6.

9. Produit de programme informatique comprenant une instruction, dans lequel lorsque le produit de programme informatique est exécuté sur un ordinateur, l'ordinateur est activé pour réaliser le procédé d'entrelacement de mémoire selon l'une quelconque des revendications 1 à 6.
